# EUROPEAN PATENT APPLICATION

(11) **EP 4 730 545 A1**
(43) Date of publication of application: **22.04.2026**
(21) Application number: 25208498.3
(22) Date of filing: 14.10.2025
(51) Int. Cl.: H01M 50/503, H01M 50/507, H01M 50/516, H01M 50/522, H01M 50/526

(54) **BUSBAR AND RECHARGEABLE BATTERY MODULE INCLUDING THE SAME**

(30) Priority: 15.10.2024 KR 20240140635
(71) Applicant: SAMSUNG SDI CO., LTD., Yongin-si, Gyeonggi-do 17084 (KR)
(72) Inventor: LEE, Hyeok, 16678 Suwon-si (KR)
(74) Representative: Marks & Clerk LLP

(57) **Abstract**

A busbar for electrically connecting a first battery to a second battery includes a first metal member electrically connectable to the first battery through a first side thereof, and a second metal member electrically connectable to the second battery through a second side thereof, and an overlapping portion in which a first portion, which is a portion of a second side of the first metal member, overlaps a second portion, which is a portion of a first side of the second metal member, has a greater heat capacity than non-overlapping portions that are portions other than the overlapping portion.

## Description

### BACKGROUND

### 1. Field

The present disclosure relates to a busbar and a rechargeable battery module including the same.

### 2. Description of the Related Art

A rechargeable battery is a battery which can be charged and discharged, unlike a primary battery which cannot be charged. Low-capacity rechargeable batteries may be used in small portable electronic devices, such as smartphones, feature phones, notebook computers, digital cameras, and camcorders, while large-capacity rechargeable batteries are widely used as power sources for driving motors for hybrid vehicles or electric vehicles and batteries for power storage. The rechargeable battery includes electrodes including a positive electrode and/or a negative electrode, an electrode assembly including the electrodes, a case accommodating the electrode assembly, electrode terminals connected to the electrode assembly, etc.

With the development of technologies, high-capacity rechargeable batteries are being required. Accordingly, a plurality of rechargeable batteries may be used by being electrically connected. For example, the rechargeable battery may be applied to an electronic device in the form of a rechargeable battery module including a plurality of rechargeable batteries and/or a rechargeable battery pack including a plurality of rechargeable battery modules. According to embodiments, a rechargeable battery pack may be composed of a plurality of rechargeable batteries. In this case, the electronic device is an electronic device requiring high output and/or high capacity, such as an electric vehicle or the like.

The plurality of rechargeable batteries constituting the rechargeable battery module or the rechargeable battery pack are electrically connected. For example, electrode terminals of two or more rechargeable batteries may be connected using a busbar such that the rechargeable batteries may be connected in series or in parallel.

The above information disclosed in this Background section is for enhancement of understanding of the background of the present disclosure, and, therefore, it may contain information that does not constitute the related art.

### SUMMARY

According to an aspect of embodiments of the present disclosure, a busbar and a rechargeable battery module including the same, which are capable of suppressing a rise in temperature through a simple structure, are provided.

According to another aspect of embodiments of the present disclosure, a busbar and a rechargeable battery module including the same, in which bonding strength at a connector is increased and which have a decreased cost, are provided.

However, aspects and objects of the present disclosure are not limited to the above-described aspects and objects, and other aspects and objects not specifically mentioned herein will be clearly understood by those skilled in the art based on the description of the present disclosure provided below.

According to one or more embodiments of the present disclosure, a busbar for electrically connecting a first battery to a second battery includes a first metal member electrically connected to the first battery through a first side thereof and a second metal member electrically connected to the second battery through a second side thereof, wherein an overlapping portion in which a first portion, which is a portion of a second side of the first metal member, overlaps a second portion, which is a portion of a first side of the second metal member, has a greater heat capacity than non-overlapping portions that are portions other than the overlapping portion.

The first metal member and the second metal member may include a same material that is a first metal, and a thickness of the overlapping portion may be greater than a thickness of the non-overlapping portion.

The first metal member and the second metal member may form an integrated structure. In the integrated structure, the non-overlapping portion may be formed to have a small thickness with respect to a plate-shaped member of which a thickness is uniform by forging.

The overlapping portion may further include a second metal member between the first portion and the second portion.

The second metal member may include a second metal different from the first metal. The second metal may be a material having a greater heat capacity than the first metal. The first metal may include aluminum, and the second metal may include copper.

The overlapping portion may be stacked in an order of the first portion, a third metal member, and the second portion and welded. The overlapping portion may further include a welding seam, and the welding seam may be arranged from an upper surface of the second portion to the first portion through the third metal member. An end portion of the welding seam may be located inside the first portion. The overlapping portion may be bonded by at least one of laser welding, clinching, and resistance welding.

According to one or more embodiments of the present disclosure, a rechargeable battery module includes a plurality of batteries arranged in at least one direction, and a busbar electrically connecting a first battery to a second battery among the plurality of batteries, wherein the busbar includes a first metal member electrically connected to the first battery through a first side thereof and a second metal member electrically connected to the second battery through a second side thereof, and an overlapping portion in which a first portion, which is a portion of a second side of the first metal member, overlaps a second portion, which is a portion of a first side of the second metal member, has a greater heat capacity than non-overlapping portions that are portions other than the overlapping portion.

The busbar may include a high voltage terminal of the rechargeable battery module. The rechargeable battery module may include one or more lower layer batteries arranged in the at least one direction and including the first battery and one or more upper layer batteries arranged parallel to the at least one direction above the lower layer battery and including the second battery.

The first metal member and the second metal member may define an integrated structure including a same material that is a first metal, and a thickness of the overlapping portion may be greater than a thickness of the non-overlapping portion.

The first metal member and the second metal member may be formed of the same material that is a first metal, the overlapping portion may further include a third metal member interposed between the first portion and the second portion, and the third metal member may include a second metal that differs from the first metal. The first metal may include aluminum, and the second metal may include copper.

The overlapping portion may be stacked in an order of the first portion, the third metal member, and the second portion and welded, the overlapping portion further includes a welding seam, and the welding seam may be arranged from an upper surface of the second portion to the first portion through the third metal member.

According to one or more embodiments of the present disclosure, a busbar for electrically connecting a first battery to a second battery comprises: a first metal member electrically connectable to the first battery through a first side thereof and including aluminum, a second metal member electrically connectable to the second battery through a second side thereof and including aluminum, and a third metal member between a portion of a second side of the first metal member and a portion of a first side of the second metal member and including copper.

According to one or more embodiments of the present disclosure, a rechargeable battery module includes a plurality of batteries arranged in at least one direction, and a busbar electrically connecting a first battery to a second battery among the plurality of batteries, wherein the busbar includes a first metal member electrically connected to the first battery through a first side thereof and including aluminum, a second metal member electrically connected to the second battery through a second side thereof and including aluminum, and a third metal member between a portion of a second side of the first metal member and a portion of a first side of the second metal member and including copper.

At least some of the above and other features of the invention are set out in the claims.

### BRIEF DESCRIPTION OF THE DRAWINGS

The following drawings included with the present specification illustrate some embodiments of the present disclosure and further describe aspects and features of the present disclosure together with the detailed description of the present disclosure. However, the present disclosure should not be construed as being limited to the drawings, in which:
FIG. 1 is a schematic view showing a cylindrical rechargeable battery according to an embodiment of the present disclosure;
FIG. 2 is a schematic cross-sectional view showing a prismatic rechargeable battery according to an embodiment of the present disclosure;
FIG. 3 is a schematic view showing an example of a pouch-type rechargeable battery according to an embodiment of the present disclosure;
FIG. 4 is a schematic view showing another example of a pouch-type rechargeable battery according to an embodiment of the present disclosure;
FIG. 5 is a schematic perspective view showing a configuration of a rechargeable battery module according to an embodiment of the present disclosure;
FIG. 6 is a schematic perspective view showing an example of two batteries arranged vertically and connected by a busbar;
FIG. 7A is a perspective view of a busbar according to an embodiment of the present disclosure;
FIG. 7B is a plan view of the busbar of FIG. 7A;
FIG. 7C is a front view of the busbar of FIG. 7A;
FIG. 7D is a bottom view of the busbar of FIG. 7A;
FIG. 8A is a perspective view showing an example of a start member for manufacturing the busbar of FIGS. 7A to 7D;
FIG. 8B is a plan view of the start member of FIG. 8A;
FIG. 8C is a front view of the start member of FIG. 8A;
FIG. 8D is a bottom view of the start member of FIG. 8A;
FIG. 9A is a perspective view showing a busbar according to an embodiment of the present disclosure;
FIG. 9B is a plan view of the busbar of FIG. 9A;
FIG. 9C is a front view of the busbar of FIG. 9A;
FIG. 9D is a bottom view of the busbar of FIG. 9A; and
FIG. 10 is a schematic cross-sectional view showing an example of a configuration of an overlapping portion of the busbar of FIGS. 9A to 9D.

### DETAILED DESCRIPTION

Herein, some embodiments of the present disclosure will be described, in further detail, with reference to the accompanying drawings. The terms or words used in the present specification and claims are not to be narrowly interpreted according to their general or dictionary meanings, but are to be interpreted as having meanings and concepts that are consistent with the technical idea of the present disclosure on the basis of the principle that an inventor can be his/her own lexicographer to appropriately define concepts of terms to describe his/her invention in the best way. The embodiments described in this specification and the configurations shown in the drawings are only some embodiments of the present disclosure and do not represent all of the aspects, features, and embodiments of the present disclosure. Accordingly, it is to be understood that there may be various equivalents and modifications that can replace or modify one or more embodiments or features therein as described herein at the time of the filing of this application.

In addition, when used in the present specification, "comprise" and "include" and/or "comprising" and "including" specify the presence of the stated features, numbers, steps, operations, members, elements, and/or groups thereof and do not preclude the presence or addition of one or more other features, numbers, operations, members, elements, and/or groups thereof.

In addition, to facilitate understanding of the invention, the accompanying drawings may not be drawn to scale, and dimensions of some components may be shown in an exaggerated manner. In addition, the same reference numbers may denote the same components in different embodiments.

When two compared objects are described as "the same," it means that they are the same or substantially the same. Accordingly, "the same" or "substantially the same" may include a deviation that is considered low in the art, for example, a deviation that falls within 5%. In addition, if a certain parameter is referred to as being uniform in a given region, it may mean that it is uniform in terms of an average.

Although "first," "second," and the like may be used to describe various components, these components are not limited by these terms. These terms are used to distinguish one component from another, and unless otherwise stated, it should be apparent that a first component may be a second component.

Throughout the specification, unless otherwise stated, each element may be singular or plural.

When any component is disposed "above (or below)" or "on (or under)" a component, it may mean not only that any component is disposed to be in contact with an upper surface (or lower surface) of the above component, but also that other components may be interposed between the above component and any component disposed on (or under) the above component.

In addition, when a certain component is stated as being "on," "connected to," or "coupled to" another component, it is to be understood that the components may not only be directly connected or joined, but that other components may be "interposed" between the components or that the components may be "connected," "coupled," or "joined" through another component.

As used herein, the term "and/or" includes any and all combinations of one or more of the associated items listed. In addition, the use of "may" when describing embodiments of the present disclosure relates to "one or more embodiments of the present disclosure." Expressions, such as "at least one of" and "any one of," if preceding a list of elements, modify the entire list of elements and do not modify individual elements of the list.

Throughout the specification, when "A and/or B" is stated, it means A, B or A and B, unless otherwise stated, and when "C to D" is stated, it means C or more and D or less, unless otherwise specified.

When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations.

The term "use" may be considered synonymous with the terms "utilize." As used herein, the terms "substantially," "about," and similar terms are used as terms of approximation and not as terms of degree and are intended to account for the inherent variations in measured or calculated values that would be recognized by those of ordinary skill in the art.

It is to be understood that although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teaching of the embodiments.

Spatially relative terms, such as "beneath," "below," "lower," "above," "upper," and the like, may be used herein for ease of description to describe a relationship of one element or feature to (an)other element(s) or feature(s) as illustrated in the figures. It is to be understood that the spatially relative terms are intended to encompass different orientations of the device in use or operation in addition to the orientations depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is intended to describe embodiments of the present disclosure and is not intended to limit the present disclosure.

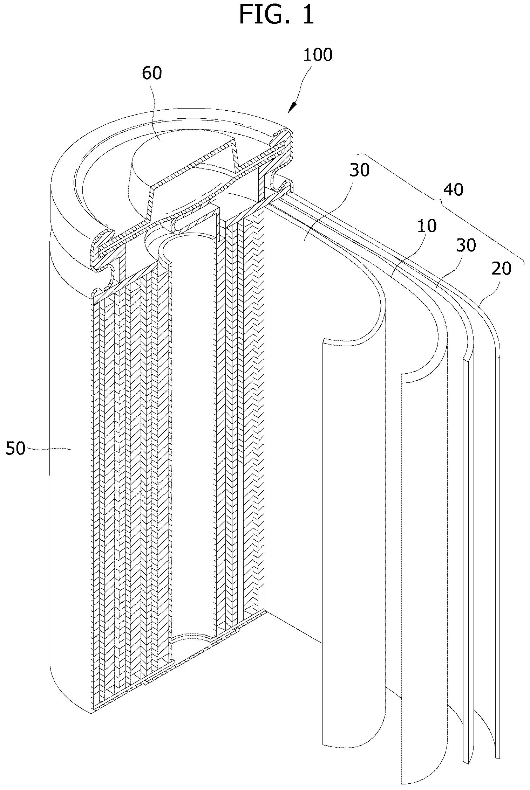

FIGS. 1 to 4 are schematic views showing a rechargeable battery 100 according to some embodiments of the present disclosure.

### Rechargeable battery 100

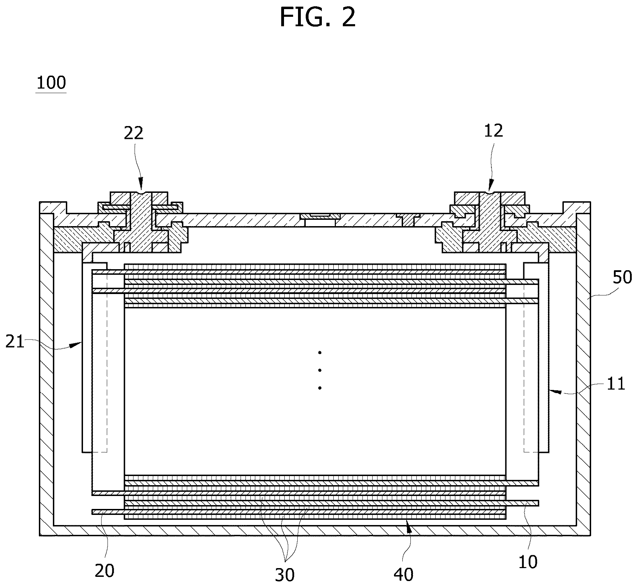

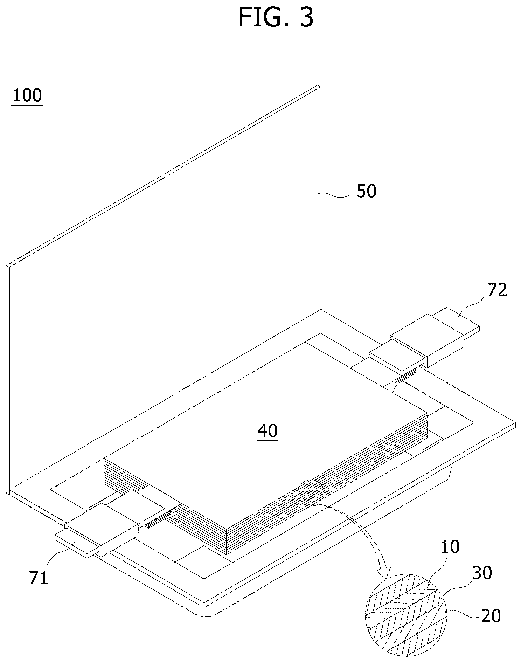

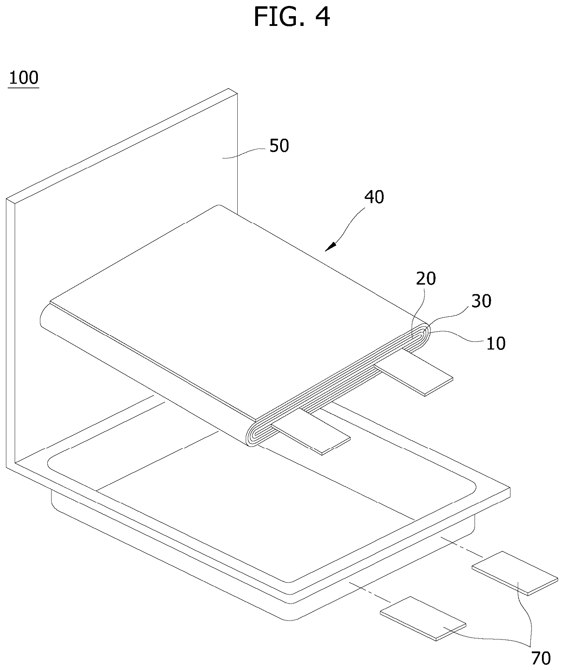

The rechargeable battery 100 may be classified as cylindrical, prismatic, pouch-type, coin-type, and the like battery according to a shape thereof. FIGS. 1 to 4 are schematic views showing a rechargeable battery 100 according to some example embodiments, in which FIG. 1 shows a cylindrical battery, FIG. 2 shows a prismatic battery, and FIGS. 3 and 4 show pouch-type batteries. Referring to FIGS. 1 to 4, the rechargeable battery 100 may include an electrode assembly 40 with a separator 30 interposed between a positive electrode 10 and a negative electrode 20, and a case 50 having the electrode assembly 40 embedded or accommodated therein. The positive electrode 10, the negative electrode 20, and the separator 30 may be impregnated with an electrolyte (not shown). The rechargeable battery 100 may include a sealing member 60 that seals a case 50, as shown in FIG. 1. In an embodiment, as shown in FIG. 2, the rechargeable battery 100 may include a positive electrode lead tab 11, a positive electrode terminal 12, a negative electrode lead tab 21, and a negative electrode terminal 22. As shown in FIGS. 3 and 4, the rechargeable batteries 100 may include electrode tabs 70, that is, a positive electrode tab 71 and a negative electrode tab 72, which function as electrical passages for guiding a current generated from the electrode assembly 40 to the outside.

### Positive electrode active material

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and a combination thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GeO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); and LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be a high-nickel-based positive electrode active material in which the nickel content is 80 mol% or more, 85 mol% or more, 90 mol% or more, 91 mol% or more, or 94 mol% or more, or 99 mol% or less based on 100 mol% of a metal of a lithium transition metal composite oxide excluding lithium. The high-nickel-based positive electrode active material can implement high capacity and thus may be applied to high-capacity, high-density lithium rechargeable batteries.

### Positive electrode 10

The positive electrode 10 for the rechargeable battery 100 may include a current collector and a positive electrode active material layer formed on the current collector. The positive electrode active material layer may include a positive electrode active material and may further include a binder and/or a conductive material.

For example, the positive electrode may further include an additive that may function as a sacrificial positive electrode.

In an embodiment, a content of the positive electrode active material is in a range of about 90 wt% to about 99.5 wt% on the basis of 100 wt% of the positive electrode active material layer, and a content of the binder and the conductive material is in a range of about 0.5 wt% to about 5 wt%, respectively, on the basis of 100 wt% of the positive electrode active material layer.

The binder attaches positive electrode active material particles well and also attaches the positive electrode active material to the current collector well. Some representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, etc., but are not limited thereto.

The conductive material provides conductivity to electrodes, and any suitable electrically conductive material that does not cause a chemical change in a battery may be used. An example of the conductive material may include a carbon-based material, such as natural graphite, artificial graphite, carbon black, acetylene black, Ketjen black, a carbon fiber, carbon nanofibers, and carbon nanotubes; a metal-based material containing copper, nickel, aluminum, silver, etc. in the form of metal powder or a metal fiber; a conductive polymer such as a polyphenylene derivative; or a mixture thereof.

In an embodiment, Al may be used as the current collector, but the present disclosure is not limited thereto.

### Negative electrode active material

The negative electrode active material includes a material capable of reversibly intercalating/deintercalating lithium ions, a lithium metal, an alloy of lithium metal, a material capable of doping and dedoping lithium, or a transition metal oxide.

The material capable of reversibly intercalating/deintercalating lithium ions may be a carbon-based negative electrode active material, which may include, for example, crystalline carbon, amorphous carbon, or a combination thereof. An example of the crystalline carbon may include graphite, such as natural graphite or artificial graphite in an amorphous, plate-like, flake-like, spherical, or fibrous form, and an example of the amorphous carbon may include soft carbon or hard carbon, mesophase pitch carbide, calcined coke, etc.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

A Si-based negative electrode active material or a Sn-based negative electrode active material may be used as the material capable of being doped and undoped with lithium. The Si-based negative electrode active material may be silicon, a silicon-carbon composite, SiOₓ (0<x<2), a Si-Q alloy (where Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include secondary particles (core) in which primary silicon particles are assembled and an amorphous carbon coating layer (shell) located on a surface of the secondary particles. In an embodiment, the amorphous carbon may be positioned between the silicon primary particles, for example, such that the silicon primary particles may be coated with the amorphous carbon. The secondary particles may be dispersed and be present in the amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material or Sn-based negative electrode active material may be used in combination with a carbon-based negative electrode active material.

### Negative electrode 20

The negative electrode 20 for the rechargeable battery 100 may include a current collector and a negative electrode active material layer formed on the current collector. The negative electrode active material layer may include a negative electrode active material and may further include a binder and/or a conductive material.

In an embodiment, for example, the negative electrode active material layer may include about 90 wt % to about 99 wt % of a negative electrode active material, about 0.5 wt % to about 5 wt % of a binder, and about 0 wt % to about 5 wt % of a conductive material.

The binder attaches the negative active material particles well and also attaches the negative active material to the current collector well. A non-aqueous binder, an aqueous binder, a dry binder, or a combination thereof may be used as the binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, a cellulose-based compound capable of imparting viscosity may be further included. As the cellulose series compound, one or more of carboxymethyl cellulose, hydroxypropylmethyl cellulose, methyl cellulose, and an alkali metal salt thereof may be used by being mixed. In an embodiment, the alkali metal may be Na, K, or Li.

The dry binder may be a polymer material capable of fiberization, for example, polytetrafluoroethylene, polyvinylidene fluoride, a polyvinylidene fluoride-hexafluoropropylene copolymer, a polyethylene oxide, or a combination thereof.

The conductive material provides conductivity to electrodes, and any suitable electrically conductive material that does not cause a chemical change in a battery may be used. A specific example may include a carbon-based material, such as natural graphite, artificial graphite, carbon black, acetylene black, Ketjen black, a carbon fiber, carbon nanofibers, and carbon nanotubes; a metal-based material in the form of metal powder or a metal fiber, including copper, nickel, aluminum, and silver; a conductive polymer such as a polyphenylene derivative; or a mixture thereof.

In an embodiment, as the negative electrode substrate, one selected from copper foil, nickel foil, stainless steel foil, titanium foil, nickel foam, copper foam, a conductive metal-coated polymer substrate, and a combination thereof may be used.

### Electrolyte (not shown)

In an embodiment, the electrolyte for a rechargeable battery 100 includes a non-aqueous organic solvent and a lithium salt.

The non-aqueous organic solvent acts as a medium through which ions involved in an electrochemical reaction of the battery can move.

The non-aqueous organic solvent may be a carbonate-based, ester-based, ether-based, ketone-based, alcohol-based, aprotic solvent, or a combination thereof.

As the carbonate-based solvent, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), etc. may be used.

As the ester-based solvent, methyl acetate, ethyl acetate, n-propyl acetate, dimethyl acetate, methyl propionate, ethyl propionate, decanolide, mevalonolactone, valerolactone, caprolactone, etc. may be used.

As the ether-based solvent, dibutyl ether, tetraglyme, diglyme, dimethoxyethane, 2-methyltetrahydrofuran, 2,5-dimethyltetrahydrofuran, tetrahydrofuran, etc. may be used. In addition, as the ketone-based solvent, cyclohexanone and the like may be used. As the alcohol-based solvent, ethyl alcohol, isopropyl alcohol, etc. may be used, and as the aprotic solvent, a nitrile such as R-CN (R is a linear, branched, or cyclic hydrocarbon group having 2 to 20 carbon atoms and may include a double bond, an aromatic ring, or an ether group); an amide such as dimethylformamide; a dioxolane such as 1,3-dioxolane and 1,4-dioxolane; a sulfolanes, etc. may be used.

The non-aqueous organic solvent may be used alone or in combination of two or more non-aqueous solvents.

In an embodiment, if the carbonate solvent is used, a cyclic carbonate and a chain carbonate may be used by being mixed, and the cyclic carbonate and the chain carbonate may be mixed at a volume ratio of 1:1 to 1:9.

The lithium salt is a substance that dissolves in an organic solvent and functions as a source of lithium ions within a battery to enable the basic operation of a rechargeable battery and expedite the movement of lithium ions between positive and negative electrodes. A representative example of the lithium salt may include one or more selected from LiPF₆, LiBF₄, LiSbF₆, LiAsF₆, LiClO₄, LiAlO₂, LiAlCl4, LiPO₂F₂, LiCl, Lil, LiN(SO₃C₂F₅)₂, Li(FSO₂)2N, lithium bis(fluorosulfonyl)imide (LiFSI), LiC₄F₉SO₃, LiN(CxF₂ₓ₊₁SO₂)(CyF_{2y+1}SO₂) (x and y are integers from 1 to 20), lithium trifluoromethane sulfonate, lithium tetrafluoroethane sulfonate, lithium difluorobis(oxalato)phosphate (LiDFOB), and lithium bis(oxalato)borate (LiBOB).

### Separator 30

Depending on a type of the rechargeable battery 100, the separator 30 may be present between the positive electrode 10 and the negative electrode 20. As the separator 30, a multilayer film of two or more layers of polyethylene, polypropylene, and polyvinylidene fluoride may be used, and it is to be apparent that a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator 30 may include a porous substrate and a coating layer containing an organic material, an inorganic material or a combination thereof positioned on one surface or both, or opposite, surfaces of the porous substrate.

The porous substrate may be a polymer film made of a polymer selected from a polyolefin, such as polyethylene and polypropylene, a polyester, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, a polyphenylene oxide, a cyclic olefin copolymer, polyphenylene sulfide, polyethylene naphthalate, a glass fiber, and polytetrafluoroethylene (e.g., Teflon), or a copolymer or mixture of two or more of the above materials.

The organic material may include a polyvinylidene fluoride-based polymer or a (meth)acrylic polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer or may be in the form of a coating layer including (or containing) an organic material and a coating layer including (or containing) an inorganic material that are stacked on each other.

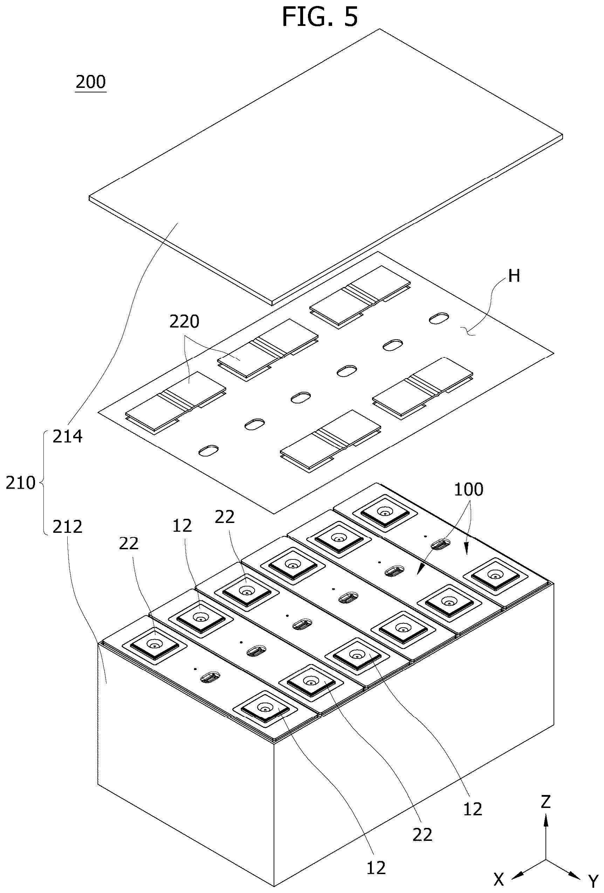

FIG. 5 is a schematic perspective view showing a configuration of a rechargeable battery module 200 according to an embodiment of the present disclosure. Referring to FIG. 5, the rechargeable battery module 200 may include a housing 210, a battery 100, and a busbar 220.

Herein, an example in which the battery 100 included in the rechargeable battery module 200 is a lithium ion battery, which is a prismatic battery, will be described. However, embodiments of the present disclosure are not limited thereto, and the battery 100 may be a pouch-type battery or a cylindrical battery, for example.

A plurality of batteries 100 may be included in the housing 210. The plurality of batteries 100 may be arranged in a row in one of a longitudinal direction (X-axis direction based on FIG. 5) or a width direction (Y-axis direction based on FIG. 5) of the housing 210. Although FIG. 5 shows an example in which six batteries 100 are arranged in a row in the longitudinal direction of the housing 210, an arrangement form of the plurality of batteries 100 is not limited thereto and may be changed in terms of design to have any of various forms. For example, inside the housing 210, two or more of the plurality of batteries 100 arranged in a row in the X-axis direction may be arranged side by side in the Y-axis direction, or two or more of the plurality of batteries 100 arranged in a row in the Y-axis direction may be arranged side by side in the X-axis direction. In an embodiment, for example, inside the housing, two or more of the plurality of batteries 100 arranged in a row in the X-axis direction and/or the Y-axis direction may be arranged by being stacked in a Z-axis direction.

The housing 210 may form a general appearance of the rechargeable battery module 200 and provide a space in which the plurality of batteries 100 may be accommodated. The housing 210 according to an embodiment may include a housing body 212 and a cover 214.

The housing body 212 may have a box shape with a hollow or empty interior and an open side. However, a cross-sectional shape of the housing body 212 is not limited to a quadrangular shape, as shown in FIG. 5, and may be varied in terms of design to have any of various shapes, such as a polygon, a circle, and an oval.

The cover 214 may be coupled to the housing body 212 to close an internal space of the housing body 212. For example, the cover 214 may be formed to have a generally plate shape and disposed to face the open side of the housing body 212. The cover 214 may be fixed to the housing body 212 by any of various types of coupling methods, such as bolting, welding, and fitting.

The busbar 220 electrically connects the plurality of batteries 100. The busbar 220 may be disposed between the cover 214 and the batteries 100. A plurality of busbars 220 may be provided. Each busbar 220 may connect a pair of neighboring batteries 100 in series or in parallel.

As an example, as shown in FIG. 5, both, or opposite, sides of the busbar 220 may be respectively connected to the first terminal 12 of one of a pair of neighboring batteries 100 and the second terminal 22 of the other of the pair of neighboring batteries 100. Therefore, the plurality of batteries 100 may be connected in series by the busbar 220.

However, both, or opposite, sides of the busbar 220 are not limited to such a connection form and may be connected to the first terminal 12 of one of the pair of neighboring batteries 100 and the second terminal 22 of the other of the pair of neighboring batteries 100, or may be connected to the second terminal 22 of one of the pair of neighboring batteries 100 and the second terminal 22 of the other of the pair of neighboring batteries 100.

The busbar 220 may be made of an electrically conductive material, such as copper, aluminum, or nickel. However, a detailed shape of the busbar 220 is not limited to that shown in FIG. 5 and may be varied in design to have any of various shapes that may electrically connect the neighboring batteries 100. A further detailed shape and characteristics of the busbar 220 according to an embodiment of the present disclosure will be described below.

The plurality of busbars 220 may be supported inside the housing 210 by a busbar holder H. The busbar holder H may be formed to have, for example, a flat shape. The busbar holder H may be disposed between the cover 214 and the batteries 100. The busbar 220 may be fixed to the busbar holder H by any of various types of coupling methods, such as fitting, bolting, and injection coupling. The busbar holder H may include an electrically insulating polymer compound material.

According to one or more embodiments, all or some of the plurality of busbars 220 may not be supported by the busbar holder H. That is, the busbar holder H may be an optional component. In an embodiment, for example, in the rechargeable battery module 200 shown in FIG. 5, the busbar 220 may be directly connected to the first terminal 12 and/or the second terminal 22 without the busbar holder H. In an embodiment, in a case in which the rechargeable battery module 200 includes a plurality of batteries 100 arranged in a row in the X-axis direction and/or the Y-axis direction and two or batteries that are stacked arranged in the Z-axis direction, one of the terminals 11 and 22 of one battery (a first battery) of a lower layer and one of the terminals 11 and 22 of one battery (a second battery) of an upper layer may be directly connected to the busbar 220 without the busbar holder H.

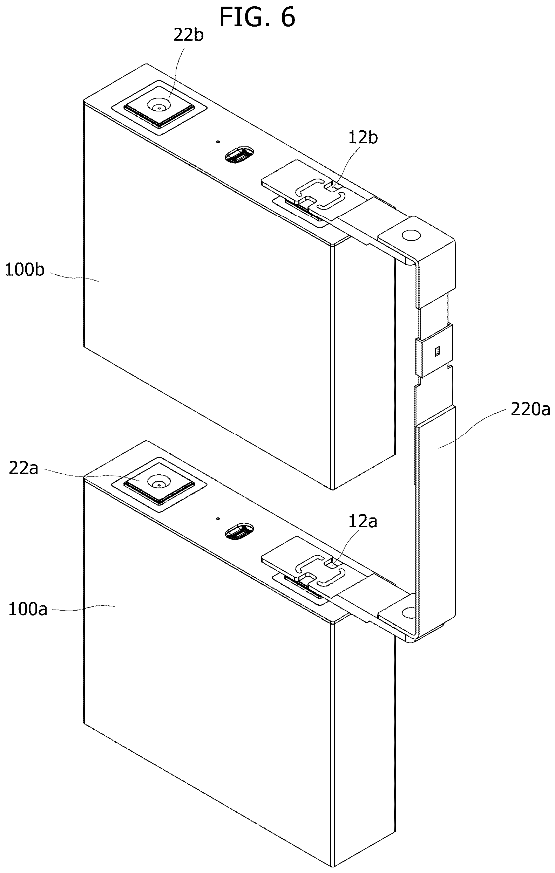

FIG. 6 is a schematic perspective view showing an example of two batteries arranged vertically and connected by a busbar 220a. However, although the drawing shows one first battery 100a and one second battery 100b disposed vertically, the first battery 100a may be one of a plurality of batteries (lower layer batteries) (see FIG. 5) arranged in a direction, and the second battery 100b may be one of the plurality of batteries (upper layer batteries) (see FIG. 5) arranged parallel to the arrangement direction of the lower layer batteries.

Referring to FIG. 6, the first battery 100a positioned at the bottom and the second battery 100b positioned at the top are electrically connected through the busbar 220a. In an embodiment, a side of the busbar 220a is coupled to a first terminal 12a of the first battery 100a, and another side of the busbar 220a is coupled to a first terminal 12b of the second battery 100b. However, the present embodiment is not limited thereto, and the busbar 220a may be coupled to the first terminal 12a of the first battery 100a and a second terminal 22b of the second battery 100b through the side and the another side thereof, respectively, or coupled to a second terminal 22a of the first battery 100a and the first terminal 12b or the second terminal 22b of the second battery 100b. A further detailed shape and characteristics of the busbar 220a according to an embodiment of the present disclosure will be described below.

The busbar 220a shown in FIG. 6 may function as an input/output terminal of the rechargeable battery module for high voltage (HV) connection. The HV connection is an electrical connection that requires a relatively high voltage, such as that of an input/output terminal of a rechargeable battery module. The rechargeable battery module including the first and second batteries 100a and 100b and the busbar 220a shown in FIG. 6 may be connected through an exposed portion of the busbar 220a to another rechargeable battery module or a unit for controlling the operation or connection of the rechargeable battery module.

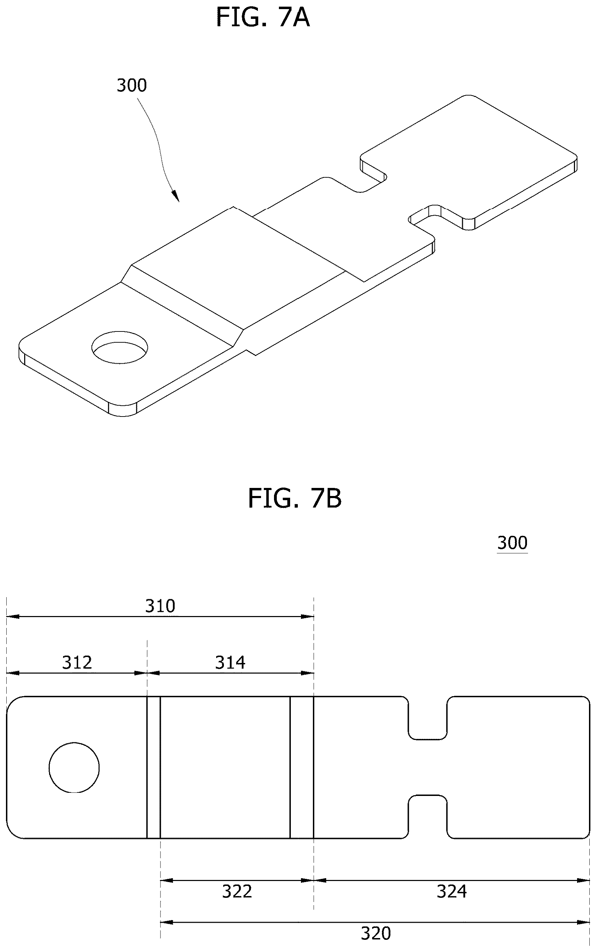

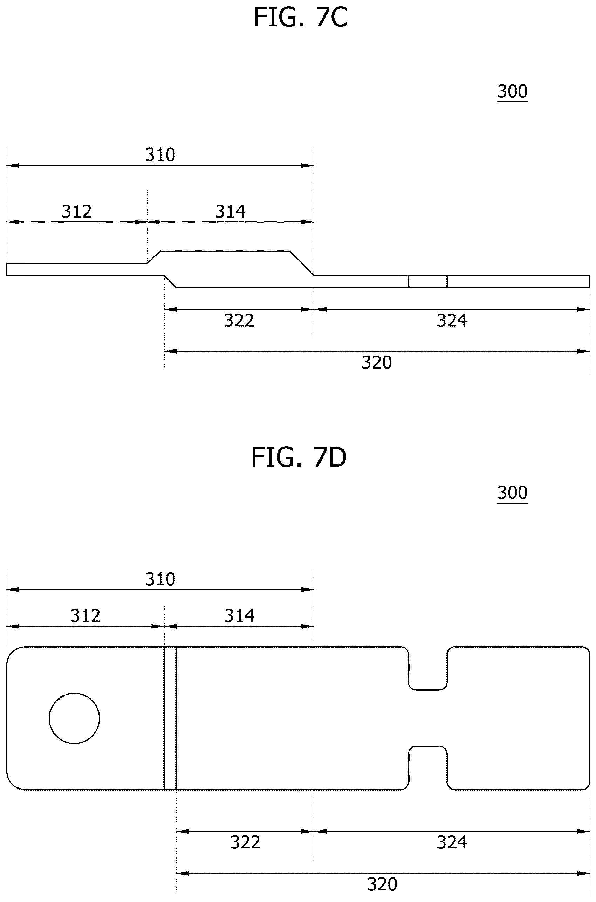

FIG. 7A is a perspective view of a busbar 300 according to an embodiment of the present disclosure; FIG. 7B is a plan view of the busbar 300 of FIG. 7A; FIG. 7C is a front view of the busbar 300 of FIG. 7A; and FIG. 7D is a bottom view of the busbar 300 of FIG. 7A. The busbar 300 shown in FIGS. 7A to 7D is a member that electrically connects two batteries, that is, a first battery and a second battery, and may correspond to all or some of the busbars 220 shown in FIG. 5 or the busbar 220a shown in FIG. 6. Referring to FIGS. 7A to 7D, the busbar 300 includes a first metal member 310 and a second metal member 320.

According to an embodiment of the present embodiment, the first metal member 310 and the second metal member 320 each have a thickness (e.g., a predetermined thickness). The thicknesses of the first metal member 310 and the second metal member 320 do not necessarily need to be the same and may be different. In addition, the thickness of each of the first metal member 310 and the second metal member 320 does not need to be entirely uniform, and there may be a different thickness depending on a position thereof.

The first metal member 310 may be electrically connected to a battery (a first battery) through a side thereof (e.g., a left side in FIGS. 7B to 7D). In an embodiment, a portion of the left side of the first metal member 310 may be directly coupled to a terminal of the first battery. However, the present disclosure is not limited thereto, and another metal member may be additionally coupled, joined, and/or extended between the portion of the left side of the first metal member 310 and the terminal of the first battery.

In addition, the second metal member 320 may be electrically connected to a battery (a second battery) through a side thereof (right side in FIGS. 7B to 7D). In an embodiment, a portion of the right side of the second metal member 320 may be directly coupled to a terminal of the second battery. However, the present disclosure is not limited thereto, and another metal member may be additionally coupled, joined, and/or extended between the portion of the right side of the second metal member 320 and the terminal of the second battery.

The first metal member 310 may be partitioned into a first left portion 312 and a first right portion 314. The first left portion 312 is a portion of the left side of the first metal member 310 and is a portion including a left end portion, and the first right portion 314 is a portion of the right side of the first metal member 310 and is a portion including a right end portion. However, a shape of each of the first left portion 312 and the first right portion 314 shown in the drawings is merely shown as an example. For example, a circular hole may not be formed in the first left portion 312.

In an embodiment, there is no need for a physical boundary between the first left portion 312 and the first right portion 314. For example, the first metal member 310 may be integrally formed of a metal plate of the same material, and there may be no boundary between the first left portion 312 and the first right portion 314.

In addition, the second metal member 320 may be partitioned into a second left portion 322 and a second right portion 324. The second left portion 322 is a portion of the left side of the second metal member 320 and is a portion including a left end portion, and the second right portion 324 is a portion of the right side of the second metal member 320 and is a portion including a right end portion. However, a shape of each of the second left portion 322 and the second right portion 324 shown in the drawings is merely shown as an example. For example, the second right portion 324 may have a rectangular shape having a same width entirely without having a relatively narrow portion.

In an embodiment, there is no need for a physical boundary between the second left portion 322 and the second right portion 324. For example, the second metal member 320 may be integrally formed of a metal plate of a same material, and there may be no boundary between the second left portion 322 and the second right portion 324.

In addition, in the drawing, the first metal member 310, particularly, the first left portion 312, is shown as being positioned above the second metal member 320, particularly, the second right portion 324. However, this is merely shown as an example, and, conversely, the first left portion 312 may be positioned under the second right portion 324, or the first left portion 312 and the second right portion 324 may be positioned at a same height.

The first left portion 312 may be a portion of the first metal member 310 that does not overlap the second metal member 320. The first right portion 314 (the first portion) may be a portion of the first metal member 310 that overlaps the second metal member 320. In addition, the second left portion 322 (the second portion) may be a portion of the second metal member 320 that overlaps the first metal member 310. The second right portion 324 may be a portion of the second metal member 320 that does not overlap the first metal member 310. Therefore, the first right portion 314 and the second left portion 322 form an overlapping portion, and the first left portion 312 and the second right portion 324 correspond to non-overlapping portions.

According to an embodiment, the overlapping portions 314, 322 have a greater heat capacity than the non-overlapping portions 312, 324. Here, "greater heat capacity" is not necessarily limited to the heat capacity defined as a physical value of a specific material greater than that of other materials. According to an embodiment, "greater heat capacity" may include, for example, even when a plate shape is made of a same material, in a case in which a portion (e.g., a relatively thicker portion) with a relatively larger cross-sectional area is present in comparison to a case (a portion with a relatively small cross-sectional area) in which there is small thickness overall, the amount of heat generation is reduced such that a rise in temperature is suppressed.

In an embodiment, for example, as shown in FIGS. 7A to 7D, the overlapping portions 314, 322 may have a greater thickness than the non-overlapping portions 312, 324. In an embodiment, if the first metal member 310 and the second metal member 320 are made of a same metal material, the overlapping portions 314, 322 have a greater cross-sectional area at a portion through which a current passes than the non-overlapping portions 312, 324. Therefore, since the overlapping portions 314, 322 exhibit lower resistance than the non-overlapping portions 312, 324, the amount of heat generation in the busbar 300 may be relatively reduced in comparison to a case in which the cross-sectional area of the overlapping portions 314, 322 is the same as the cross-sectional areas of the non-overlapping portions 312, 324, thereby suppressing a rise in temperature caused by heat generation.

In an embodiment, the first metal member 310 and the second metal member 320 may be formed of a same metal material. However, there is no particular limitation to the types of the first and second metal members 310, 320, and the metal members 310, 320, for example, may be formed of a material such as copper, aluminum, or nickel. In particular, according to an embodiment, the first and second metal members 310, 320 may be formed of a relatively inexpensive metal, such as aluminum.

In general, aluminum has a lower heat capacity than other metals, such as copper. Therefore, when the busbar 300 has a same shape, in comparison to a case in which one of the first and second metal members 310, 320 is formed of aluminum and the other of the first and second metal members 310, 320 is formed of copper, manufacturing costs can be lowered, but temperature may rise relatively greatly due to heat generation when both the first and second metal members 310, 320 are formed of aluminum. However, according to an embodiment, the overlapping portions 314, 322 have a greater thickness than the non-overlapping portions 312, 324, and a rise in temperature may be suppressed even if both the first and second metal members 310, 320 are formed of aluminum.

According to an aspect of an embodiment, if the first and second metal members 310, 320 are formed of a same material, the busbar 300 may be formed as an integrated structure of the first metal member 310 and the second metal member 320. Here, "integrated structure" is a structure formed entirely of a single material without a bonded surface or boundary surface in the corresponding structure. In this case, distinction between the first metal member 310 and the second metal member 320 in FIGS. 7A to 7D is set virtually only for convenience of description, and in the actual busbar 300, the first metal member 310 and the second metal member 320 may not be distinguished.

According to an embodiment, there is no particular limitation to a method of manufacturing the busbar 300 as an integrated structure. For example, the busbar 300 may be manufactured through processing using a method (e.g., a predetermined method) that starts with a single plate-shaped member (a start member).

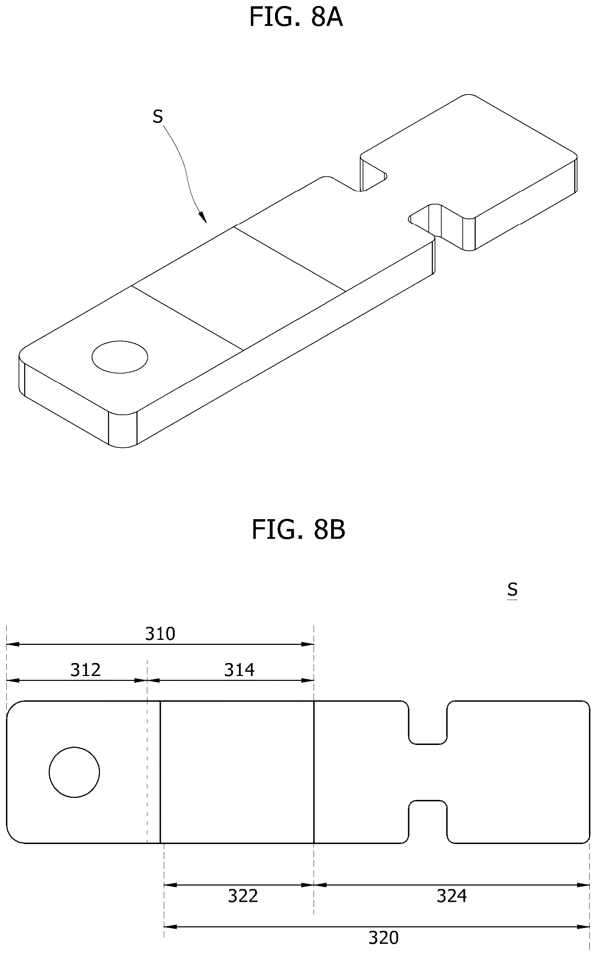

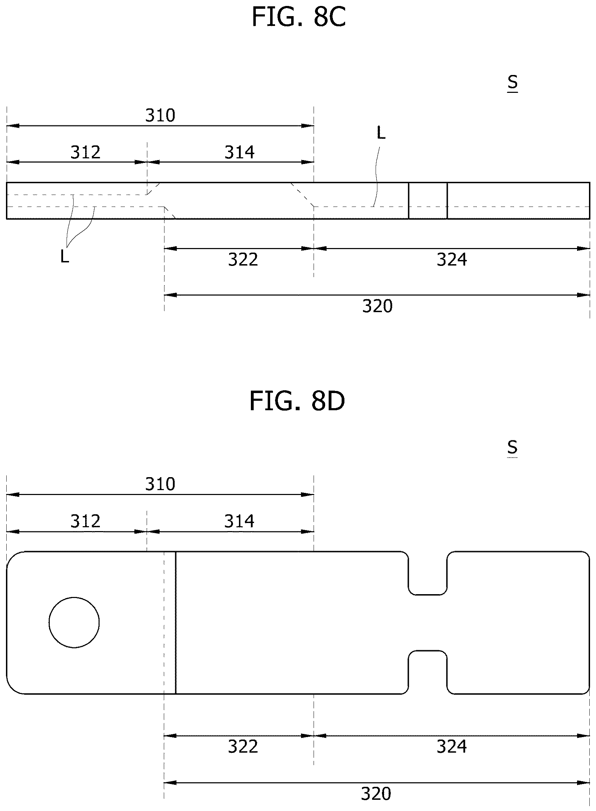

FIG. 8A is a perspective view showing an example of a start member S for manufacturing the busbar 300 of FIGS. 7A to 7D; FIG. 8B is a plan view of the start member S of FIG. 8A; FIG. 8C is a front view of the start member S of FIG. 8A; and FIG. 8D is a bottom view of the start member S of FIG. 8A. Referring to FIGS. 8A to 8D, the start member S is a plate-shaped member having a same (e.g., entirely the same) thickness, for example, the same thickness as the overlapping portions 314, 322 of the busbar 300 of FIGS. 7A to 7D. In an embodiment, if the start member S is processed by a forging method in accordance with a line L marked on the plan view of FIG. 8C, the start member S may be manufactured as the busbar 300 in FIGS. 7A to 7D.

In an embodiment, if the busbar 300 is an integrated structure manufactured from a single plate-shaped member (the start member), there is no need to bond the first metal member 310 and the second metal member 320 by a method such as welding when manufacturing the busbar 300. Therefore, since a welding process is not required, a process cost required for manufacturing the busbar 300 can be reduced. In addition, since there is no bonded portion, the possibility of occurrences of defective products due to poor bonding or the like can be reduced.

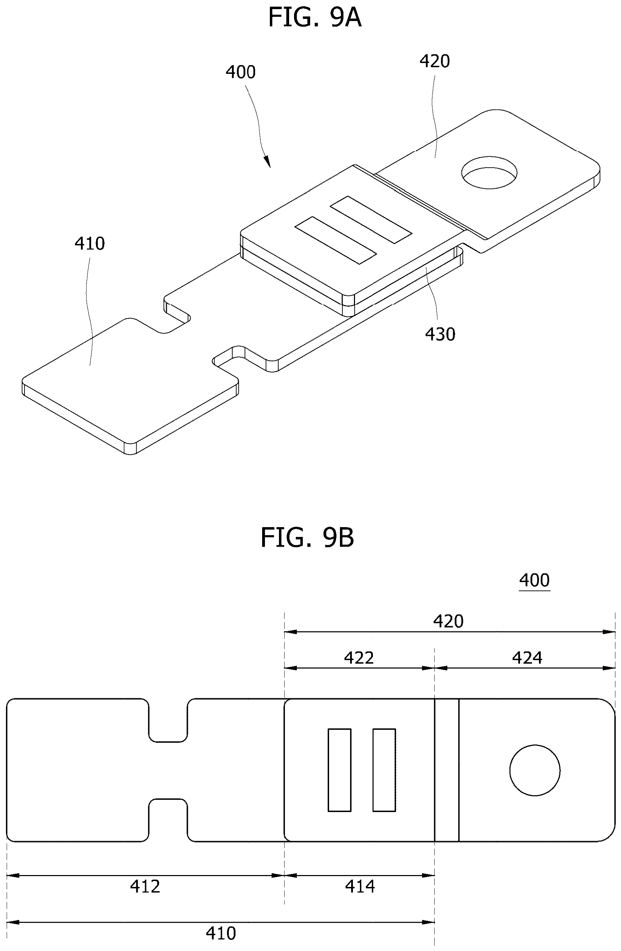

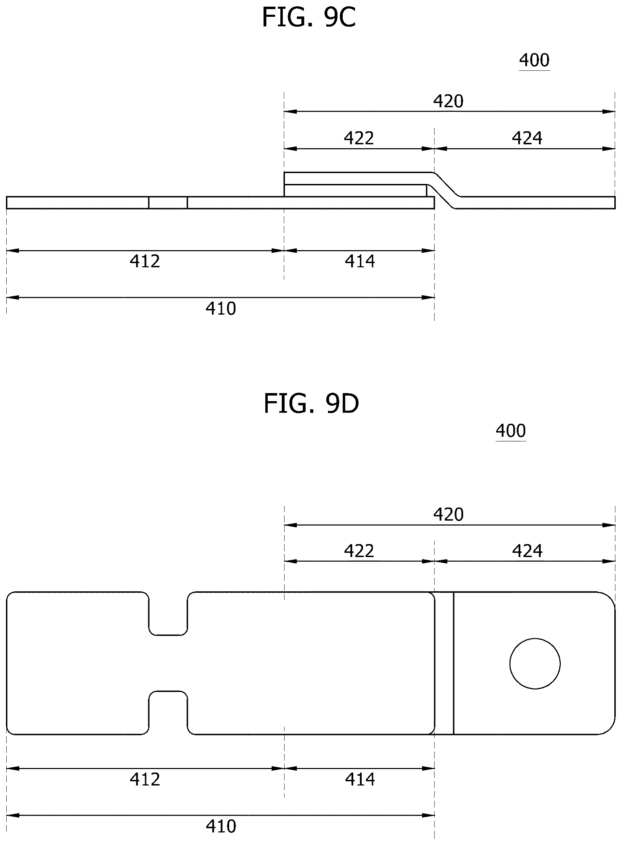

FIG. 9A is a perspective view showing a busbar 400 according to another embodiment of the present disclosure; FIG. 9B is a plan view of the busbar 400 of FIG. 9A; FIG. 9C is a front view of the busbar 400 of FIG. 9A; and FIG. 9D is a bottom view of the busbar 400 of FIG. 9A. The busbar 400 shown in FIGS. 9A to 9D is a member that electrically connects two batteries, that is, a first battery and a second battery, and may correspond to all or some of the busbars 220 shown in FIG. 5 or the busbar 220a shown in FIG. 6. Referring to FIGS. 9A to 9D, the busbar 400 includes a first metal member 410, a second metal member 420, and a third metal member 430.

According to an embodiment of the present embodiment, the first metal member 410 and the second metal member 420 each have a thickness (e.g., a predetermined thickness). However, the thicknesses of the first metal member 410 and the second metal member 420 do not necessarily need to be the same and may be different. In an embodiment, the thickness of each of the first metal member 410 and the second metal member 420 do not need to be entirely uniform and may have a different thickness depending on a position thereof.

The first metal member 410 may be electrically connected to the battery (a first rechargeable battery) through a side (left side in FIGS. 9B to 9D). In an embodiment, a portion of the left side of the first metal member 410 may be directly coupled to a terminal of the first battery. However, the present disclosure is not limited thereto, and another metal member may be additionally coupled, joined, and/or extended between the portion of the left side of the first metal member 410 and the terminal of the first battery.

In an embodiment, the second metal member 420 may be electrically connected to the battery (a second battery) through an end portion (right end portion in FIGS. 9B to 9D). In an embodiment, a portion of the right side of the second metal member 420 may be directly coupled to a terminal of the second battery. However, the present disclosure is not limited thereto, and another metal member may be additionally coupled, joined, and/or extended between the portion of the right side of the second metal member 420 and the terminal of the second battery.

The first metal member 410 may be partitioned into a first left portion 412 and a first right portion 414. The first left portion 412 is a portion of the left side of the first metal member 410 and is a portion including a left end portion, and the first right portion 414 is a portion of the right side of the first metal member 410 and is a portion including a right end portion. However, a shape of each of the first left portion 412 and the first right portion 414 shown in the drawings is merely an example. In an embodiment, for example, the first left portion 412 may have a rectangular shape having a same width entirely without having a relatively narrow portion.

In an embodiment, there is no need for a physical boundary between the first left portion 412 and the first right portion 414. For example, if the first metal member 410 is integrally formed of a metal plate of a same material, there may be no boundary between the first left portion 412 and the first right portion 414.

In an embodiment, the second metal member 420 may be partitioned into a second left portion 422 and a second right portion 424. The second left portion 422 is the portion of the second metal member 420 and is a portion including a left end portion, and the second right portion 424 is the portion of the second metal member 420 and is a portion including a right end portion. However, a shape of each of the second left portion 422 and the second right portion 424 shown in the drawings is merely an example. For example, a circular hole may not be formed in the second right portion 424.

In an embodiment, there is no need for a physical boundary between the second left portion 422 and the second right portion 424. For example, if the second metal member 420 is integrally formed of a metal plate of a same material, there may be no boundary between the second left portion 422 and the second right portion 424.

In an embodiment, in the drawings, the first metal member 410, particularly, the first right portion 414, is shown as being positioned under the second metal member 420, particularly, the second left portion 422. However, this is merely an example, and the first right portion 414 may be positioned above the second left portion 422.

The first left portion 412 may be a portion of the first metal member 410 that does not overlap the second metal member 420. On the other hand, the first right portion 414 (a first portion) may be a portion of the first metal member 410 that overlaps the second metal member 420. In addition, the second left portion 422 (a second portion) may be a portion of the second metal member 420 that overlaps the first metal member 410. On the other hand, the second right portion 424 may be a portion of the second metal member 420 that does not overlap the first metal member 410. Therefore, the first right portion 414 and the second left portion 422 form a portion of overlapping portions, and the first left portion 412 and the second right portion 424 correspond to non-overlapping portions.

According to an embodiment, the overlapping portion further includes a third metal member 430 interposed between the first right portion 414 and the second left portion 422 in addition to the first right portion 414 and the second left portion 422. The third metal member 430 may be a plate having a thickness (e.g., a predetermined thickness), which has a flat shape facing the first right portion 414 and the second left portion 422. In addition, the overlapping portions 414, 422, 430 including the third metal member 430 have a greater heat capacity than the non-overlapping portions 412 and 424. There is no particular limitation to the method of forming the overlapping portions 414, 422, 430 having a greater heat capacity than the non-overlapping portions 412, 424.

According to an embodiment of the present embodiment, the third metal member 430 may be formed of a metal having a greater heat capacity than the first right portion 414 and the second left portion 422. If the first metal member 410 and the second metal member 420 are made of a same metal material, the third metal member 420 may be formed of a metal having a greater heat capacity than the first and second metal members 410, 420.

There is no particular limitation to the types of the first and second metal members 410, 420, but, in an embodiment, the first and second metal members, for example, may be formed of a material such as copper, aluminum, or nickel. In an embodiment, the first and second metal members 410, 420 may be formed of a relatively inexpensive metal, such as aluminum. However, since aluminum has a lower heat capacity than other metals, such as copper, the third metal member 430 may be formed of copper having a greater heat capacity than aluminum such that the overlapping portions 414, 422, 430 have a relatively greater heat capacity than the non-overlapping portions 412 and 424.

Therefore, since the overlapping portions 414, 422, 430 include a copper plate having a relatively greater heat capacity, it is possible to suppress as greatly as possible a rise in temperature caused by heat generation from the busbar 400, particularly, the overlapping portions 414, 422, 430. In addition, since the first and second metal members 410, 420 having a relatively larger size are formed of relatively inexpensive aluminum and the third metal member 430 having a relatively smaller size is formed of relatively expensive copper, it is possible to suppress an increase in cost of the busbar 400.

According to an aspect of the present embodiment, the first right portion 414, the third metal member 430, and the second left portion 422 that form the overlapping portions 414, 422, 430 may be bonded by a suitable method (e.g., a predetermined method). For example, the overlapping portions 414, 422, 430 may be stacked in an order of the first right portion 414, the third metal member 430, and the second left portion 422 and bonded by a method such as laser welding, clinching (e.g., Toxing), or resistance welding, but the method is not limited thereto.

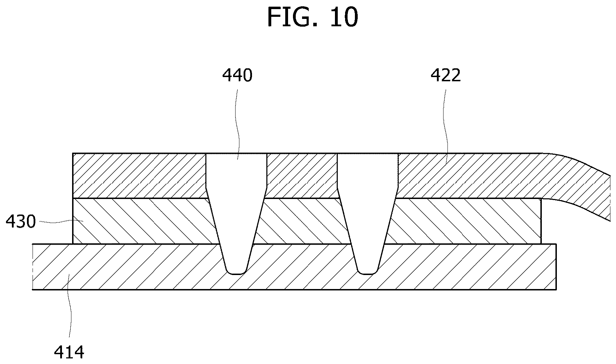

FIG. 10 is a schematic cross-sectional view showing an example of a configuration of an overlapping portion of the busbar of FIGS. 9A to 9D. In an embodiment, referring to FIG. 10, the overlapping portion of the busbar further includes a welding seam 440 for bonding the first right portion 414, the third metal member 430, and the second left portion 422 that are stacked sequentially.

For example, the welding seam 440 may be arranged from an upper surface of the second left portion 422 to the first right portion 414 through the third metal member 430. Therefore, since three members, that is, the first right portion 414, the third metal member 430, and the second left portion 422, are bonded by the welding seam 440, a bonding strength in the overlapping portions may be greater than that of a case in which two members are bonded by the welding seam.

In this case, an end portion of the welding seam 440 may be positioned inside the first right portion 414. Therefore, the bonding strength of the overlapping portions may be greater than that of a case in which the end portion of the welding seam 440 is positioned on a lower surface of the first right portion 414.

According to embodiments of the present disclosure, a rise in temperature of a busbar may be suppressed by forming a portion (the overlapping portion) of the busbar that has a relatively great heat capacity.

However, aspects and effects of the present disclosure are not limited to those described above, and other aspects and effects that are not specifically mentioned herein will be clearly understood by those skilled in the art based on the description of the present disclosure.

Embodiments are set out in the following clauses.

Clause 1. A busbar for electrically connecting a first battery to a second battery, the busbar comprising: a first metal member electrically connectable to the first battery through a first side thereof; and a second metal member electrically connectable to the second battery through a second side thereof, wherein an overlapping portion in which a first portion, which is a portion of a second side of the first metal member, overlaps a second portion, which is a portion of a first side of the second metal member, has a greater heat capacity than non-overlapping portions that are portions other than the overlapping portion.

Clause 2. The busbar of Clause 1, wherein the first metal member and the second metal member comprise a same material that is a first metal, and a thickness of the overlapping portion is greater than a thickness of the non-overlapping portion.

Clause 3. The busbar of Clause 2, wherein the first metal member and the second metal member define an integrated structure.

Clause 4. The busbar of Clause 3, wherein, in the integrated structure, the non-overlapping portion is formed to have a small thickness with respect to a plate-shaped member of which a thickness is uniform by forging.

Clause 5. The busbar of Clause 2, wherein the overlapping portion further comprises a second metal member between the first portion and the second portion.

Clause 6. The busbar of Clause 5, wherein the second metal member comprises a second metal different from the first metal.

Clause 7. The busbar of Clause 6, wherein the second metal is a material having a greater heat capacity than the first metal.

Clause 8. The busbar of Clause 7, wherein the first metal comprises aluminum, and the second metal comprises copper.

Clause 9. The busbar of Clause 5, wherein the overlapping portion is stacked in an order of the first portion, a third metal member, and the second portion and welded.

Clause 10. The busbar of Clause 9, wherein the overlapping portion further comprises a welding seam, and the welding seam is arranged from an upper surface of the second portion to the first portion through the third metal member.

Clause 11. The busbar of Clause 10, wherein an end portion of the welding seam is located inside the first portion.

Clause 12. The busbar of Clause 9, wherein the overlapping portion is bonded by at least one of laser welding, clinching, and resistance welding.

Clause 13. A rechargeable battery module comprising: a plurality of batteries arranged in at least one direction; and a busbar electrically connecting a first battery to a second battery among the plurality of batteries, wherein the busbar comprises: a first metal member electrically connected to the first battery through a first side thereof; and a second metal member electrically connected to the second battery through a second thereof, and an overlapping portion in which a first portion, which is a portion of a second side of the first metal member, overlaps a second portion, which is a portion of a first side of the second metal member, has a greater heat capacity than non-overlapping portions that are portions other than the overlapping portion.

Clause 14. The rechargeable battery of Clause 13, wherein the busbar comprises a high voltage terminal of the rechargeable battery module.

Clause 15. A rechargeable battery module comprising: a plurality of batteries arranged in at least one direction; and a busbar electrically connecting a first battery to a second battery among the plurality of batteries, wherein the busbar comprises: a first metal member electrically connected to the first battery through a first side thereof and comprising aluminum; a second metal member electrically connected to the second battery through a second side thereof and comprising aluminum; and a third metal member between a portion of a second side of the first metal member and a portion of a first side of the second metal member and comprising copper.

The present disclosure has been described with reference to some example embodiments shown in the accompanying drawings, but these are merely illustrative, and those skilled in the art to which the corresponding technology pertains will understand that various modifications and other equivalent embodiments may be made therefrom.

Therefore, the technical scope of the present disclosure should be determined by the claims.

## Claims

1. A busbar for electrically connecting a first battery to a second battery, the busbar comprising:
a first metal member electrically connectable to the first battery through a first side thereof; and
a second metal member electrically connectable to the second battery through a second side thereof,
wherein an overlapping portion in which a first portion, which is a portion of a second side of the first metal member, overlaps a second portion, which is a portion of a first side of the second metal member, has a greater heat capacity than non-overlapping portions that are portions other than the overlapping portion.

2. The busbar as claimed in claim 1, wherein the first metal member and the second metal member comprise the same material that is a first metal, and
a thickness of the overlapping portion is greater than a thickness of the non-overlapping portion.

3. The busbar as claimed in claim 1 or 2, wherein the first metal member and the second metal member define an integrated structure.

4. The busbar as claimed in claim 3, wherein, in the integrated structure, the non-overlapping portions are formed to have a small thickness with respect to a plate-shaped member of which a thickness is uniform by forging.

5. The busbar as claimed in any one of claims 1 to 4, wherein the overlapping portion further comprises a third metal member between the first portion and the second portion.

6. The busbar as claimed in claim 5, when dependent on claim 2, wherein the third metal member comprises a second metal different from the first metal.

7. The busbar as claimed in claim 6, wherein the second metal is a material having a greater heat capacity than the first metal.

8. The busbar as claimed in claim 6 or 7, wherein the first metal comprises aluminum and the second metal comprises copper.

9. The busbar as claimed in any one of claims 5 to 8, wherein the overlapping portion is stacked in an order of the first portion, the third metal member, and the second portion and bonded, optionally welded.

10. The busbar as claimed in claim 9, wherein the overlapping portion further comprises a welding seam, and
the welding seam is arranged from an upper surface of the second portion to the first portion through the third metal member.

11. The busbar as claimed in claim 10, wherein an end portion of the welding seam is located inside the first portion.

12. The busbar as claimed in claim 9, 10 or 11, wherein the overlapping portion is bonded by at least one of laser welding, clinching, and resistance welding.

13. A rechargeable battery module comprising:
a plurality of batteries arranged in at least one direction; and
the busbar according to any preceding claim, the busbar electrically connecting a first battery to a second battery among the plurality of batteries.

14. The rechargeable battery as claimed in claim 13, wherein the busbar comprises a high voltage terminal of the rechargeable battery module.

15. A rechargeable battery module comprising:
a plurality of batteries arranged in at least one direction; and
a busbar electrically connecting a first battery to a second battery among the plurality of batteries,
wherein the busbar comprises:
a first metal member electrically connected to the first battery through a first side thereof and comprising aluminum;
a second metal member electrically connected to the second battery through a second side thereof and comprising aluminum; and
a third metal member between a portion of a second side of the first metal member and a portion of a first side of the second metal member and comprising copper.
